# EUROPÄISCHE PATENTANMELDUNG

(11) **EP 2 988 343 A1**
(43) Veröffentlichungstag der Anmeldung: **24.02.2016**
(21) Anmeldenummer: 15181541.2
(22) Anmeldetag: 19.08.2015
(51) Int. Cl.: H01M 2/02

(54) **VERFAHREN ZUR HERSTELLUNG EINER UMHÜLLUNG FÜR EINE BATTERIEZELLE**

(30) Priorität: 22.08.2014 DE 102014112080
(71) Anmelder: Manz AG, 72768 Reutlingen (DE)
(72) Erfinder: Schaupp, Martin, 72800 Eningen (DE)
(74) Vertreter: Kohler Schmid Möbus Patentanwälte

(57) **Zusammenfassung**

Ein Verfahren zur Herstellung einer Umhüllung (17) für eine Batteriezelle (11), die einen Zellkörper(10) mit einem Elektrodenstapel aus mehreren, im Wechsel angeordneten und durch Separatoren getrennten Anoden und Kathoden aufweist, dadurch gekennzeichnet, dass auf den fertigen Zellkörper (10) zumindest bereichsweise eine den Zellkörper (10) mechanisch schützende Beschichtung (16) aufgebracht wird, die die Umhüllung (17) bildet.

## Beschreibung

Die Erfindung betrifft ein Verfahren zur Herstellung einer Umhüllung für eine Batteriezelle, die einen Zellkörper mit einem Elektrodenstapel aus mehreren, im Wechsel angeordneten und durch Separatoren getrennten Anoden und Kathoden aufweist.

Der Elektrodenstapel kann dabei auch gewickelt oder gefaltet sein. Außerdem kann der Elektrodenstapel auch galvanisch hergestellt sein.

Die Umhüllung oder Verpackung ist notwendig, um den in der Regel flüssigen Elektrolyt in der Zelle aufnehmen zu können. Außerdem schützt die Umhüllung die Zelle vor mechanischen Belastungen und ermöglicht ein Zusammenfügen mehrerer Zellen zu einem Akku-Pack.

Bisher werden die Umhüllungen in der Regel aus Formteilen gefertigt, wobei die Formteile beispielsweise aus Folien durch Tiefziehen herstellbar sind. Eine solche Verpackung ist beispielsweise in der DE 10 2009 005 498 A1 beschrieben. Zumindest für ein Formteil muss ein der Form des Zellkörpers angepasstes Tiefziehwerkzeug bereitgestellt werden. Auch für das Verschließen einer aus mehreren Formteilen hergestellten Verpackung müssen bei einigen Herstellungsverfahren der Form der Zelle angepasste Heißsiegelstempel eingesetzt werden.

Die Formen heutiger Batterien werden jedoch immer komplexer. Nicht für jede beliebige Form des Zellkörpers lässt sich ein Tiefzieh-Formteil aus einer Folie herstellen, da die Dehn- und Verformbarkeit einer Folie begrenzt sind. Außerdem müssen für verschieden geformte galvanische Zellen jeweils eigene kostenintensive Fertigungslinien für die Umhüllung bereitgestellt werden.

Der vorliegenden Erfindung liegt daher die Aufgabe zugrunde, ein Verfahren zur Herstellung einer Umhüllung für eine Batteriezelle vorzuschlagen, mit dem auch kompliziert geformte Batteriezellen kostengünstig mit einer Umhüllung versehen werden können.

Die Aufgabe wird gelöst durch ein Verfahren zur Herstellung einer Umhüllung für eine Batteriezelle, die einen Zellkörper mit einem Elektrodenstapel aus mehreren, im Wechsel angeordneten und durch Separatoren getrennten Anoden und Kathoden aufweist, das dadurch gekennzeichnet ist, dass auf den fertigen Zellkörper zumindest bereichsweise eine den Zellkörper mechanisch schützende Beschichtung aufgebracht wird, die die Umhüllung bildet.

Eine Beschichtung kann auf einen beliebig geformten Zellkörper passgenau aufgebracht werden. Dazu sind keine teuren und der Form des Zellkörpers angepassten Tiefziehwerkzeuge oder andere, von der Form des Zellkörpers abhängige Werkzeuge erforderlich. Die Beschichtung schützt den Elektrodenstapel vor äußeren Einflüssen und Beschädigungen und nimmt den Elektrolyt der Zelle auf. Die Anschlusskontakte der Zelle können durch die Beschichtung nach außen ragen, d.h. beim Aufbringen der Beschichtung auf den Zellkörper ausgespart werden.

Es können auch in einer Fertigungslinie Zellkörper unterschiedlicher Geometrien mit einer Beschichtung versehen werden. Den möglichen Zellgeometrien sind dabei keine Grenzen gesetzt. Die von einer Beschichtung gebildete Umhüllung weist außerdem einen minimalen Platzbedarf auf, sodass der Einbauraum für die Batteriezelle in einem Endgerät vollständig für den Zellkörper ausgenutzt werden kann.

Bei einer möglichen Verfahrensvariante kann eine aus mindestens drei Lagen bestehende Beschichtung auf den Zellkörper aufgebracht werden, wobei jede der Lagen auch mehrschichtig aufgebaut sein kann. Dabei kann die innerste Lage aus einem Material hergestellt werden, das ein Eindringen der Beschichtungsmaterialien in den Elektrodenstapel verhindert. Die Elektrodenlagen dürfen nicht durch das aufgebrachte Beschichtungsmaterial durchdrungen werden. Die innerste Lage stellt daher eine Dichtschicht dar, die die einzelnen Elektrodenlagen gegeneinander verschließt.

Eine weitere Lage wird zweckmäßigerweise aus einem Material hergestellt, das für den später in die Zelle einzufüllenden Elektrolyt sowie für Gase undurchlässig ist. Diese Lage bildet eine Sperrschicht, die dafür sorgt, dass die entstehenden Gase die Umhüllung nicht verlassen können.

Eine dritte Lage, vorzugsweise die äußerste Lage, kann aus einem Material gefertigt werden, das mechanischen Beanspruchungen standhält, und somit den notwendigen Schutz des Zellkörpers vor Stößen und Kratzern gewährleisten.

Die verschiedenen Lagen können dabei in einem Prozessschritt oder aber auch nacheinander aufgetragen werden.

Die Beschichtung kann durch geeignete chemische, mechanische, thermische oder thermomechanische Verfahren aufgebracht werden. Bevorzugt kann die Beschichtung beispielsweise durch Aufsprühen, durch Tauchbäder und/oder durch chemisches Abscheiden auf den Zellkörper aufgebracht werden. Ist die Beschichtung mehrlagig, so können die einzelnen Lagen auch durch unterschiedliche Prozesse aufgebracht werden.

Weitere Vorteile ergeben sich, wenn während des Aufbringens der Beschichtung ein Rückschlagventil für das spätere Einfüllen eines Elektrolyts in die Umhüllung integriert wird. Das Rückschlagventil wird dadurch in die Beschichtung eingegossen.

Das Rückschlagventil könnte jedoch auch Teil einer Deckelkonstruktion sein, die auf den Zellkörper aufgesetzt wird, nachdem er an den nicht vom Deckel abgedeckten Seiten mit einer Umhüllung nach einem erfindungsgemäßen Verfahren versehen worden ist.

Die Erfindung betrifft außerdem eine Batteriezelle mit einem Zellkörper, der einen Elektrodenstapel aus mehreren, im Wechsel angeordneten und durch Separatoren getrennten Anoden und Kathoden aufweist und zumindest teilweise mit einer Umhüllung versehen ist, die dadurch gekennzeichnet ist, dass die Umhüllung von einer auf den Zellkörper aufgebrachten Beschichtung gebildet ist.

Im Vergleich zu Batteriezellen mit einer Folienverpackung weist die erfindungsgemäße Zelle eine platzsparendere Umhüllung auf, da bei einer Hülle aus einer Beschichtung auf Schweißränder zwischen einzelnen Formteilen verzichtet werden kann. Außerdem ist die Umhüllung der erfindungsgemäßen Zelle weitaus günstiger herzustellen als die Verpackungen bekannter Zellen.

Der Elektrodenstapel kann auch gewickelt oder gefaltet sein, um zylindrische oder andere geometrische Zellkörperformen herstellen zu können.

Die Beschichtung kann aus mindestens drei Lagen gebildet sein. Die verschiedenen Lagen können dabei die Funktion einer Dichtschicht, einer Sperrschicht für in der Zelle entstehende Gase sowie einer mechanischen Schutzschicht übernehmen. Es können auch weitere Schichten, insbesondere eine farbige Deckschicht aufgebracht werden.

Dabei ist es insbesondere für die weitere Handhabung der Batteriezelle von Vorteil, wenn die Beschichtung zumindest teilweise aus einem formstabil aushärtenden Material gebildet ist. Die Umhüllung bildet dann eine Art festes Gehäuse um den Zellkörper.

Die Zelle kann außerdem ein Rückschlagventil für einen Elektrolyt aufweisen, durch das der Elektrolyt später einfüllbar ist.

Nachfolgend werden anhand der Zeichnung bevorzugte Verfahrensvarianten zur Herstellung einer Umhüllung für eine Batteriezelle sowie Ausführungsbeispiele erfindungsgemäßer Batteriezellen näher beschrieben.

Es zeigen:
- Fig. 1a - c: eine schematische Darstellung verschiedener Phasen des Aufbringens einer Beschichtung auf einen Zellkörper einer Batteriezelle;
- Fig. 2: eine schematische Darstellung einer zweiten Batteriezelle mit Umhüllung;
- Fig. 3: eine schematische Darstellung des Aufbringens einer Beschichtungslage durch Aufsprühen;
- Fig. 4: eine schematische Darstellung des Aufbringens einer Beschichtung durch ein Tauchbad.

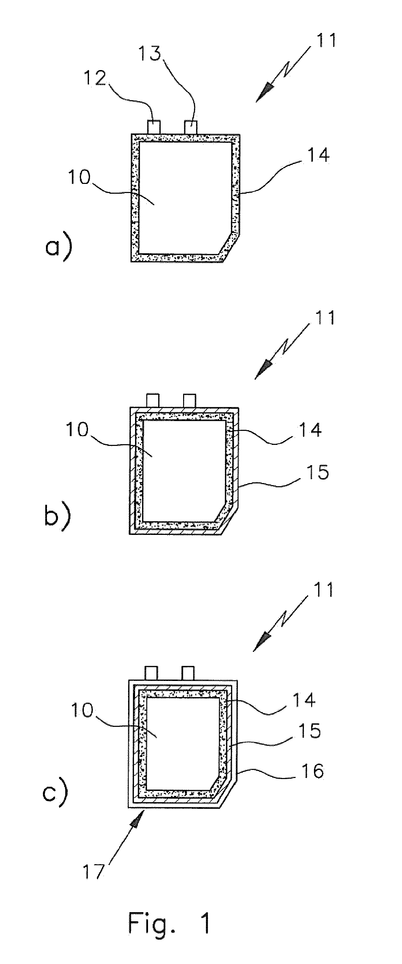

In Fig. 1a ist ein Zellkörper 10 für eine im Entstehungsprozess befindliche Batteriezelle 11 schematisch dargestellt. Der Zellkörper weist einen nicht näher dargestellten Elektrodenstapel aus Anoden, Kathoden und Separatoren auf, die jeweils im Wechsel übereinandergeschichtet sind. Die Anoden werden untereinander und mit einem ersten Anschlusskontakt 12 des Zellkörper 10 verbunden. Die Kathoden werden in gleicher Weise mit einem zweiten Anschlusskontakt 13 verbunden. Zum Schutz des Zellkörpers 10 und zur Aufnahme eines später in die Zelle 11 einzufüllenden Elektrolyts wird der Zellkörper mit einer Umhüllung 17 (Fig. 1c) versehen, die aus einer mehrlagigen Beschichtung des Zellkörpers 10 besteht. Dazu wird zunächst in dem in Fig. 1a gezeigten Schritt eine erste, als Dichtschicht wirkende Lage 14 auf den Zellkörper aufgebracht, die ein Eindringen von Beschichtungsmaterial in den Zellkörper 10 verhindert.

Anschließend wird im Schritt 1b eine weitere Lage 15 aufgetragen, die eine Sperrschicht für in der Zelle 11 entstehende Gase sowie für den Elektrolyt bildet.

Abschließend wir im dargestellten Beispiel in Fig. 1c eine dritte Lage 16 als Deckschicht aufgebracht, die den Zellkörper vor mechanischen Belastungen schützt.

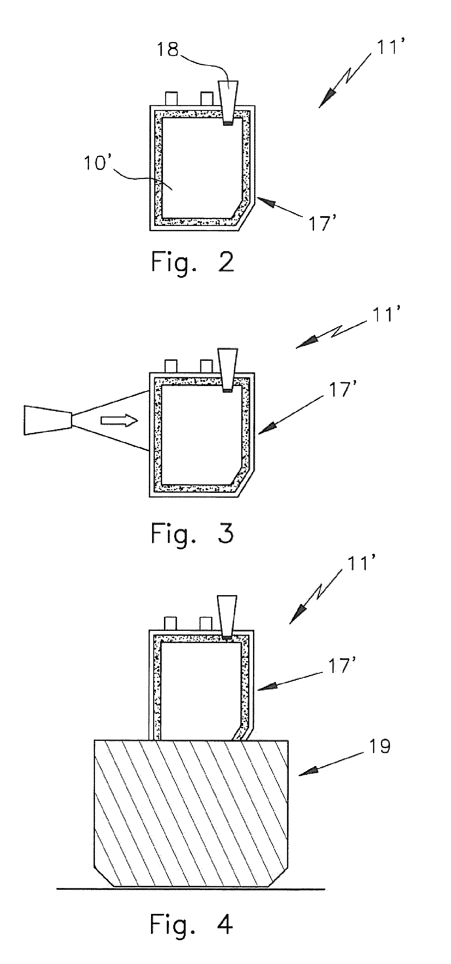

Fig. 2 zeigt eine alternative Ausgestaltung einer Batteriezelle 11', die zusätzlich mit einem Rückschlagventil 18 für den später einzufüllenden Elektrolyt versehen ist. Das Rückschlagventil kann beim Aufbringen der Umhüllung 17' auf den Zellkörper 10' mit eingegossen werden.

In Fig. 3 ist eine erste Möglichkeit des Aufbringens der Umhüllung 17' gezeigt. Die einzelnen Lagen der als Beschichtung des Zellkörpers 10' ausgeführten Umhüllung 17' werden hier in einem Sprühverfahren auf den Zellköper 10' aufgetragen.

Fig. 4 zeigt eine alternative Möglichkeit des Auftragens der Lagen der Umhüllung 17'. Hier wird der Zellkörper 10' in ein Tauchbad 19 mit einem flüssigen Lagenmaterial getaucht.

## Patentansprüche

1. Verfahren zur Herstellung einer Umhüllung (17, 17') für eine Batteriezelle (11, 11'), die einen Zellkörper(10, 10') mit einem Elektrodenstapel aus mehreren, im Wechsel angeordneten und durch Separatoren getrennten Anoden und Kathoden aufweist, **dadurch gekennzeichnet, dass** auf den fertigen Zellkörper (10, 10') zumindest bereichsweise eine den Zellkörper (10, 10') mechanisch schützende Beschichtung (14, 15, 16) aufgebracht wird, die die Umhüllung (17, 17') bildet.

2. Verfahren nach Anspruch 1, **dadurch gekennzeichnet dass** eine aus mindesten drei Lagen (14, 15, 16) bestehende Beschichtung auf den Zellkörper (10, 10') aufgebracht wird.

3. Verfahren nach Anspruch 2, **dadurch gekennzeichnet, dass** die innerste Lage (14) aus einem Material hergestellt wird, das ein Eindringen der Beschichtungsmaterialien in den Elektrodenstapel verhindert.

4. Verfahren nach Anspruch 2 oder 3, **dadurch gekennzeichnet, dass** eine weitere Lage (15) aus einem Material hergestellt wird, das für den später in die Zelle (11, 11') einzufüllenden Elektrolyt sowie für Gase undurchlässig ist.

5. Verfahren nach einem der Ansprüche 2 bis 4, **dadurch gekennzeichnet, dass** eine dritte Lage (16) aus einem Material gefertigt wird, das mechanischen Beanspruchungen standhält.

6. Verfahren nach einem der Ansprüche 2 bis 5, **dadurch gekennzeichnet, dass** die Lagen (14, 15, 16) nacheinander aufgetragen werden.

7. Verfahren nach einem der vorhergehenden Ansprüche, **dadurch gekennzeichnet, dass** die Beschichtung (14, 15, 16) durch chemische, mechanische, thermische oder thermomechanische Verfahren aufgebracht wird.

8. Verfahren nach Anspruch 7, **dadurch gekennzeichnet, dass** die Beschichtung (14, 15, 16) durch Aufsprühen, durch Tauchbäder (19) und/oder durch chemisches Abscheiden auf den Zellkörper (10, 10') aufgebracht wird.

9. Verfahren nach einem der vorhergehenden Ansprüche, **dadurch gekennzeichnet, dass** während des Aufbringens der Beschichtung (14, 15, 16) ein Rückschlagventil (18) für das spätere Einfüllen eines Elektrolyts in die Umhüllung (17, 17') integriert wird.

10. Batteriezelle mit einem Zellkörper (10, 10'), der einen Elektrodenstapel aus mehreren, im Wechsel angeordneten und durch Separatoren getrennten Anoden und Kathoden aufweist und zumindest teilweise mit einer Umhüllung (17, 17') versehen ist, **dadurch gekennzeichnet, dass** die Umhüllung (17, 17') von einer auf den Zellkörper (10, 10') aufgebrachten Beschichtung (14, 15, 16) gebildet ist.

11. Batteriezelle nach Anspruch 10, **dadurch gekennzeichnet, dass** die Beschichtung aus mindestens drei Lagen (14, 15, 16) gebildet ist.

12. Batteriezelle nach Anspruch 10 oder 11, **dadurch gekennzeichnet, dass** die Beschichtung (14, 15, 16) zumindest teilweise aus einem formstabil aushärtenden Material gebildet ist.

13. Batteriezelle nach einem der Ansprüche 10 bis 12, **dadurch gekennzeichnet, dass** sie ein Rückschlagventil (18) für einen Elektrolyt aufweist.
